# EUROPÄISCHE PATENTSCHRIFT

(11) **EP 4 591 699 B1**
(45) Veröffentlichungstag und Bekanntmachung des Hinweises auf die Patenterteilung: **26.08.2026**
(21) Anmeldenummer: 24217430.8
(22) Anmeldetag: 04.12.2024
(51) Int. Cl.: A01D 43/08

(54) **SELBSTFAHRENDER FELDHÄCKSLER MIT BERÜHRUNGSLOSER BODENABSTANDSERFASSUNG**
SELF-PROPELLED FORAGE HARVESTER WITH CONTACTLESS GROUND DISTANCE DETECTION
RAMASSEUSE-HACHEUSE AUTOMOTRICE DOTÉE D'UNE DÉTECTION DE DISTANCE AU SOL SANS CONTACT

(30) Priorität: 09.01.2024 DE 102024100399
(43) Veröffentlichungstag der Anmeldung: 30.07.2025
(73) Patentinhaber: CLAAS Saulgau GmbH, 88340 Bad Saulgau (DE)
(72) Erfinder: Reinhardt, Martin, 88367 Hohentengen (DE); Fischer, Josef, 88400 Biberach (DE); Maucher, Hubert, 88410 Bad Wurzach (DE)
(74) Vertreter: Budach, Steffen

(56) Entgegenhaltungen:
- EP-A1- 1 281 310
- EP-A1- 3 391 724
- DE-A1- 102008 056 297

## Beschreibung

Die vorliegende Erfindung betrifft einen selbstfahrenden Feldhäcksler mit einem einstellbaren Vorsatzgerät, welches eine Arbeitsstellung zum Mähen, Aufnehmen und Weiterfördern von stängelartigem Erntegut, insbesondere Mais, Miscanthus oder Sorghum, aufweist und außerdem eine Transportstellung für Straßenfahrten umfasst, wobei das Vorsatzgerät in der Transportstellung eine kleinere Vorsatzgerätebreite als in der Arbeitsstellung ausbildet. Aufgrund der zunehmenden Leistungssteigerung von landwirtschaftlichen Erntemaschinen kommen immer größere und schwerere Vorsatzgeräte zum Einsatz. In der Regel werden Schneidwerke von Mähdreschern beim Straßentransport vom selbstfahrenden Mähdrescher abgekuppelt und auf einem Transportwagen abgelegt. Demgegenüber werden Vorsatzgeräte, insbesondere Maisgebisse und Maispflücker, von selbstfahrenden Feldhäckslern in der Regel für den Straßentransport nicht abgekuppelt, sondern verbleiben am Feldhäcksler. Mittels unterschiedlicher Klappmechanismen, insbesondere mittels Aktoren gestützten Klappmechanismen, können diese Vorsatzgeräte für den Straßentransport zur Erreichung einer schmaleren Breite zusammengeklappt werden.

In der DE 10 2008 056 297 A1 ist ein Feldhäcksler mit wenigstens einer höhenbeweglichen Aufnahmevorrichtung zur Adaption eines landwirtschaftlichen Vorsatzgerätes offenbart, wobei das Vorsatzgerät in der Transportposition durch wenigstens ein mit dem Boden in Kontakt stehendes Stützrad abgestützt wird und mit einer Bremseinrichtung zum Abbremsen der Räder des Feldhäckslers ausgestattet ist, wobei eine Steuereinrichtung vorhanden ist, die beim Betätigen der Bremseinrichtung den Auflagedruck des wenigstens einen Stützrades auf dem Boden regelt. Zur Ermittlung einer Achslast ist dem Stützrad und einer gebremsten Triebachse jeweils ein Lastsensor zugeordnet, der über eine Leitung mit einer Steuereinrichtung in Verbindung steht.

Aus der EP 3 391 724 A1 ist ein selbstfahrender Feldhäcksler nach dem Oberbegriff des Anspruchs 1 bekannt, wobei ein Vorsatzgerät eine Vorrichtung zur Erfassung des Bodenabstandes bezüglich des Bodens aufweist.

Der vorliegenden Erfindung liegt die Aufgabe zugrunde, eine verbesserte Ausführungsform eines Feldhäckslers anzugeben, der eine optimale Höheneinstellung des Vorsatzgerätes während Transportfahrten ermöglicht.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass das Vorsatzgerät eine berührungslose Sensorvorrichtung zur Erfassung des Bodenabstandes des Vorsatzgerätes bezüglich des Bodens aufweist, und eine Einstellvorrichtung des selbstfahrenden Feldhäckslers dazu vorgesehen und eingerichtet, insbesondere ausgebildet und/oder programmiert, ist, während der Transportstellung in Abhängigkeit des sensorisch erfassten Bodenabstandes den Abstand des Vorsatzgerätes bezüglich des Bodens derart einzustellen, dass das Vorsatzgerät einen vorgegebenen Bodenabstand einnimmt. Hierdurch wird eine optimale Höheneinstellung des Vorsatzgerätes während Transportfahrten gesichert.

Der selbstfahrende Feldhäcksler weist einen oder mehrere Aktoren auf, mittels derer die Einstellvorrichtung das Vorsatzgerät während der Transportstellung derart einstellen kann, dass das Vorsatzgerät den vorgegebenen Bodenabstand aufweist.

Zusätzlich kann der selbstfahrende Feldhäcksler zum lösbar anbringbaren Vorsatzgerät mehrere Arbeitsaggregate zum Bearbeiten und Weiterleiten des Ernteguts aufweisen. Ein solches Arbeitsaggregat kann ein Häckselwerk des Feldhäckslers, eine Konditioniereinrichtung bzw. Korncracker des Feldhäckslers, einen Nachbeschleuniger des Feldhäckslers und/oder einen Auswurfkrümmer des Feldhäckslers ausbilden.

Der selbstfahrende Feldhäcksler kann einen Antriebsmotor, insbesondere einen Elektromotor und/oder einen Dieselmotor, zum Antrieb des Vorsatzgerätes, der Arbeitsaggregate und/oder zum Vortrieb des selbstfahrenden Feldhäckslers mit einer Fahrgeschwindigkeit entlang einer Fahrtrichtung aufweisen.

Die Einstellvorrichtung kann als Steuer- und/oder Regelvorrichtung ausgebildet sein, die eine Einstellung durch eine Steuerung und/oder Regelung des selbstfahrenden Feldhäckslers, insbesondere von Komponenten, insbesondere des Vorsatzgerätes und/oder der Arbeitsaggregate, des selbstfahrenden Feldhäcksler, bewirkt. Die Einstellvorrichtung kann eine Recheneinheit, insbesondere eine computerbasierte Recheneinheit, und einen Datenspeicher, insbesondere einen computerlesbaren Datenspeicher, aufweisen.

Bei einer vorteilhaften Weiterbildung der erfindungsgemäßen Lösung ist vorgesehen, dass die berührungslose Sensorvorrichtung als Radarsensor ausgebildet ist. Hierdurch kann die Entfernungsmessung zwischen dem Vorsatzgerät und dem Boden auf der Grundlage von Signallaufzeiten erfolgen.

Bei einer vorteilhaften Weiterbildung der erfindungsgemäßen Lösung ist vorgesehen, dass das einstellbare Vorsatzgerät ein mittleres Vorsatzgeräteteil und wenigstens zwei seitliche Vorsatzgeräteteile aufweist. Das mittlere Vorsatzgeräteteil kann etwa der Breite des Trägerfahrzeugs des selbstfahrenden Feldhäckslers entsprechen.

Das mehrteilige Vorsatzgerät hat den Vorteil, dass verschiedene Ausgestaltungen des Vorsatzgerätes bei unterschiedlichen erforderlichen Vorsatzgerätebreiten stets ein vergleichbares mittleres Vorsatzgeräteteil aufweisen, wobei mittels der Anzahl und/oder der Ausgestaltung der seitlichen Vorsatzgeräteteile die erforderlichen Vorsatzgerätebreiten realisiert wird. Hierdurch können die Herstellungskosten verschiedener Vorsatzgeräte insgesamt reduziert werden, da stets das gleiche mittlere Vorsatzgeräteteil eingesetzt wird.

Bei einer vorteilhaften Weiterbildung der erfindungsgemäßen Lösung ist vorgesehen, dass die seitlichen Vorsatzgeräteteile derart mit dem mittleren Vorsatzgeräteteil einstellbar verbunden sind, dass die seitlichen Vorsatzgeräteteile in der Arbeitsstellung seitlich des mittleren Vorsatzgeräteteils und in der Transportstellung oberhalb des mittleren Vorsatzgeräteteils angeordnet sind, sodass das Vorsatzgerät in der Transportstellung eine kleinere Vorsatzgerätebreite als in der Arbeitsstellung aufweist. Hierfür kann das Vorsatzgerät mittels einem von der Einstellvorrichtung einstellbaren Klappmechanismus von der Arbeitsstellung, die wesentlich über die zulässige Straßentransportbreite hinausgeht, in die zusammengefaltete, d. h. verklappte, Transportstellung eingestellt werden.

Bei einer vorteilhaften Weiterbildung der erfindungsgemäßen Lösung ist vorgesehen, dass die berührungslose Sensorvorrichtung am mittleren Vorsatzgeräteteil des einstellbaren Vorsatzgerätes angeordnet ist. Dies hat den Vorteil, dass der sensorisch erfasste Bodenabstand des mittleren Vorsatzgeräteteils bezüglich des Bodens sowohl während der Transportstellung als auch während der Arbeitsstellung erfasst werden kann.

Bei einer vorteilhaften Weiterbildung der erfindungsgemäßen Lösung ist vorgesehen, dass die berührungslose Sensorvorrichtung derart ausgebildet und am mittleren Vorsatzgeräteteil des einstellbaren Vorsatzgerätes angeordnet ist, dass zusätzlich zum aktuellen Bodenabstand ein zukünftiger Bodenabstand zeitlich vorausschauend erfassbar ist.

Bei einer vorteilhaften Weiterbildung der erfindungsgemäßen Lösung ist vorgesehen, dass die Einstellvorrichtung dazu vorgesehen und eingerichtet ist, während der Transportstellung die Aktoren in Abhängigkeit des sensorisch vorausschauend erfassten Bodenabstandes derart einzustellen, dass das Vorsatzgerät den vorgegebenen Bodenabstand zeitoptimiert einnimmt. Hierdurch kann eine Böschung schon früher erfasst und der Bodenabstand zeitpassend erhöht werden. Ist die Böschung überwunden, kann dies mit dem Radarsensor ebenfalls schneller erfasst werden und das einstellbare Vorsatzgerät wieder auf den ursprünglichen Bodenabstand abgesenkt werden.

Bei einer vorteilhaften Weiterbildung der erfindungsgemäßen Lösung ist vorgesehen, dass das einstellbare Vorsatzgerät mehrere Einstellaktoren zur Einstellung der seitlichen Vorsatzgeräteteile bezüglich des mittleren Vorsatzgeräteteils aufweist. Hierbei ist es vorgesehen, dass die seitlichen Vorsatzgeräteteile derart mittels der Einstellaktoren mit dem mittleren Vorsatzgeräteteil verbunden sind, dass die seitlichen Vorsatzgeräteteile in der Arbeitsstellung seitlich des mittleren Vorsatzgeräteteils und in der Transportstellung oberhalb des mittleren Vorsatzgeräteteils angeordnet werden können.

Bei einer vorteilhaften Weiterbildung der erfindungsgemäßen Lösung ist vorgesehen, dass die Einstellvorrichtung dazu vorgesehen und eingerichtet ist, während der Transportstellung die Aktoren in Abhängigkeit des sensorisch erfassten Bodenabstandes derart einzustellen, dass der erfasste Bodenabstand reduziert wird, falls dieser erfasste Bodenabstand größer ist als der vorgegebene Bodenabstand. Alternativ oder zusätzlich ist die Einstellvorrichtung dazu vorgesehen und eingerichtet, während der Transportstellung die Aktoren in Abhängigkeit des sensorisch erfassten Bodenabstandes derart einzustellen, dass der erfasste Bodenabstand vergrößert wird, falls dieser erfasste Bodenabstand kleiner ist als der vorgegebene Bodenabstand. Dies führt zu einem besseren Komfort als auch zu einer gesteigerten Sicherheit für einen Fahrer des selbstfahrenden Feldhäckslers, da der Fahrer den Feldhäcksler nicht anhalten und aus diesem nicht aussteigen muss, um zu prüfen, ob der Bodenabstand des Vorsatzgerätes ausreichend ist. Außerdem werden hierdurch Achslasten des selbstfahrenden Feldhäckslers und/oder Sichtfelder des Fahrers mittels der Regelung des Bodenabstandes des Vorsatzgerätes optimiert.

Bei einer vorteilhaften Weiterbildung der erfindungsgemäßen Lösung ist vorgesehen, dass die Einstellvorrichtung dazu eingerichtet ist, den vorgegebenen Bodenabstand in Abhängigkeit von Maschinenparametern des selbstfahrenden Feldhäckslers zu ermitteln. Diese Maschinenparameter des selbstfahrenden Feldhäckslers können in einem Datenspeicher der Einstellvorrichtung hinterlegt sein.

Bei einer vorteilhaften Weiterbildung der erfindungsgemäßen Lösung ist vorgesehen, dass die Einstellvorrichtung dazu eingerichtet ist, den vorgegebenen Bodenabstand in Abhängigkeit von Maschinenparametern des einstellbaren Vorsatzgerätes zu ermitteln. Diese Maschinenparameter des einstellbaren Vorsatzgerätes können in einem Datenspeicher der Einstellvorrichtung hinterlegt sein.

Bei einer vorteilhaften Weiterbildung der erfindungsgemäßen Lösung ist vorgesehen, dass die Einstellvorrichtung dazu eingerichtet ist, den vorgegebenen Bodenabstand fahrgeschwindigkeitsabhängig einzustellen. Hierbei kann es vorgesehen sein, dass bei einer Reduktion der Fahrgeschwindigkeit, also einem Bremsvorgang, eine Erhöhung des vorgegebenen Bodenabstandes vorgenommen wird, da ein solcher Bremsvorgang ein Indikator für eine kritische Situation sein kann.

Bei einer vorteilhaften Weiterbildung der erfindungsgemäßen Lösung ist vorgesehen, dass die Einstellvorrichtung dazu eingerichtet ist, in Abhängigkeit des sensorisch erfassten Bodenabstandes eine Schwingungstilgung des Vorsatzgerätes einzustellen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: einen selbstfahrender Feldhäcksler in einer Arbeitsstellung, und
- Fig. 2: den Feldhäcksler in einer Transportstellung, und
- Fig. 3: den Feldhäcksler in einer weiteren Transportstellung.

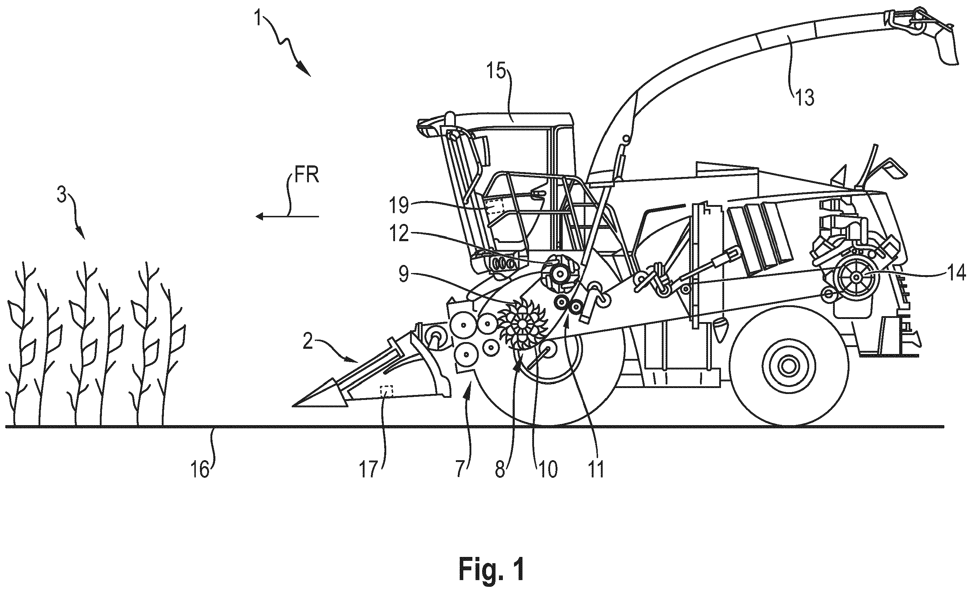

Die Fig. 1 zeigt einen erfindungsgemäßen selbstfahrenden Feldhäcksler 1 während eines Einsatzes auf einem landwirtschaftlichen Feld.

Der Feldhäcksler 1 weist ein Vorsatzgerät 2 zur Aufnahme von stängelartigem Erntegut 3, insbesondere Mais, Miscanthus oder Sorghum, auf. In der dargestellten Arbeitsstellung des Feldhäckslers 1 fährt der Feldhäcksler 1 in eine Fahrtrichtung FR durch den Erntegutbestand und nimmt dabei mit dem Vorsatzgerät 2 das Erntegut 3 auf. In diesem Erntebetrieb des Feldhäckslers 1 wird das Erntegut 3 vom Vorsatzgerät 2 geschnitten. Das Vorsatzgerät 2 ist austauschbar am Feldhäcksler 1 angeordnet. In Abhängigkeit vom Erntegut 2 und/oder dem Erntegutzweck können daher verschiedene Vorsatzgeräte 3 genutzt werden.

Das Vorsatzgerät 2 nimmt das Erntegut 3 auf und fördert es zu einem Erntegutbearbeitungskanal des Feldhäckslers 1, wobei der Erntegutbearbeitungskanal das Erntegut 3 bearbeitet und anschließend zu einem Auswurfkrümmer 13 des Feldhäckslers 1 fördert. Dieser Erntegutbearbeitungskanal weist einen Einzugskanal 7 zum Zuführen des Ernteguts 3 in den Feldhäcksler 1, ein Häckselwerk 8 mit einer Häckseltrommel 9 und einem Trommelblech 10 zum Verarbeiten des Ernteguts 3, eine Konditioniereinrichtung 11 bzw. ein Korncracker mit Konditionierwalzen und einen Nachbeschleuniger 12 zum Nachbeschleunigen des Ernteguts 3 auf.

Der selbstfahrende Feldhäcksler 1 weist eine Fahrerkabine 15 für einen nicht dargestellten Fahrer und einen Antriebsmotor 14 auf. Der Antriebsmotor 14 ist zum Antrieb des Vorsatzgerätes, der anderen Arbeitsaggregate und zum Vortrieb des selbstfahrenden Feldhäckslers 1 mit einer Fahrgeschwindigkeit entlang der Fahrtrichtung FR vorgesehen. Außerdem weist der Feldhäcksler 1 eine Einstellvorrichtung 19 zur Einstellung des Vorsatzgerätes 2 auf.

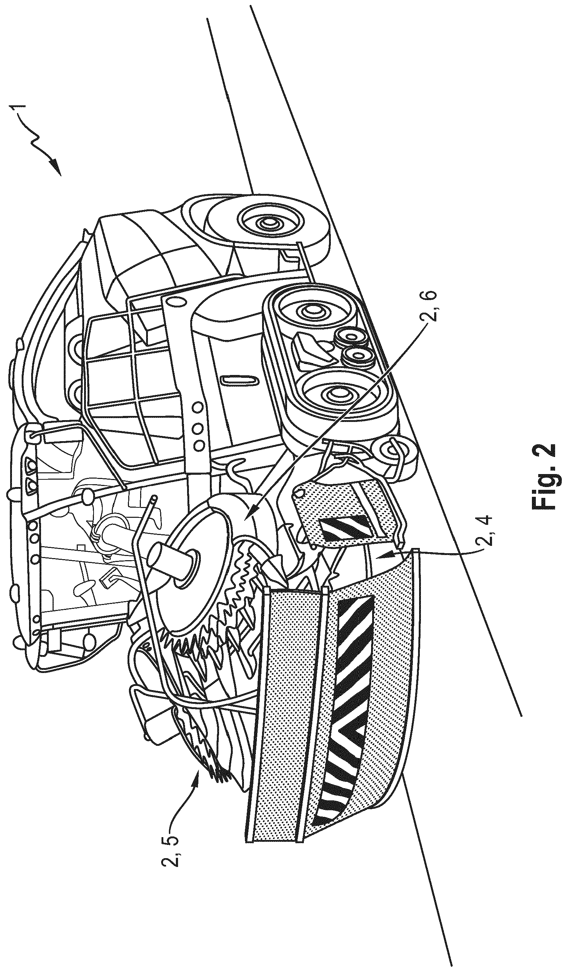

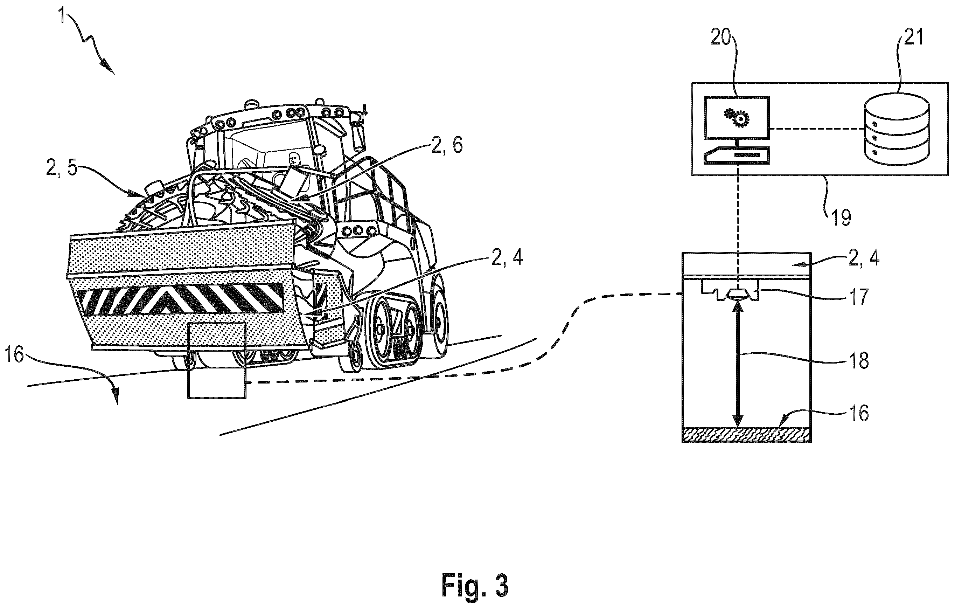

Im Gegensatz zur Fig. 1 ist der selbstfahrende Feldhäcksler 1 in den Fig. 2 und 3 während einer Straßenfahrt dargestellt. Das Vorsatzgerät 2 des selbstfahrenden Feldhäckslers 1 ist als mittels nicht dargestellten Einstellaktoren einstellbares Vorsatzgerät 2 ausgebildet, welches eine Arbeitsstellung zum Mähen, Aufnehmen und Weiterfördern des Ernteguts 3, wie in der Fig. 1 angedeutet, und eine Transportstellung für Straßenfahrten aufweist, wie es in den Fig. 2 und 3 dargestellt ist.

Während der Transportstellung weist das Vorsatzgerät 2 eine kleinere Vorsatzgerätebreite als in der Arbeitsstellung auf. Gemäß der Fig. 3 nimmt das Vorsatzgerät 2 während der Transportstellung einen mittels nicht dargestellten weiteren Aktoren einstellbaren Bodenabstand 18 bezüglich des Bodens 16 ein.

Erfindungsgemäß weist das Vorsatzgerät 2 eine berührungslose Sensorvorrichtung 17 zur Erfassung des Bodenabstandes 18 bezüglich des Bodens 16 auf, wobei die Einstellvorrichtung 19 dazu eingerichtet ist, während der Transportstellung die nicht dargestellten Aktoren in Abhängigkeit des sensorisch erfassten Bodenabstandes 18 derart einzustellen, dass das Vorsatzgerät 2 einen vorgegebenen Bodenabstand 18 einnimmt.

Wie in der Fig. 2 und 3 dargestellt, weist das einstellbare Vorsatzgerät 2 ein mittleres Vorsatzgeräteteil 4 und wenigstens zwei seitliche Vorsatzgeräteteile 5, 6 auf. Die seitlichen Vorsatzgeräteteile 5, 6 sind derart mit dem mittleren Vorsatzgeräteteil 4 einstellbar verbunden, dass die seitlichen Vorsatzgeräteteile 5, 6 in der Arbeitsstellung, wie in der Fig. 1 dargestellt, seitlich des mittleren Vorsatzgeräteteils 4 und in der Transportstellung oberhalb des mittleren Vorsatzgeräteteils 4 angeordnet sind, sodass das Vorsatzgerät 2 in der Transportstellung eine kleinere Vorsatzgerätebreite als in der Arbeitsstellung aufweist.

Die Einstellvorrichtung 19 ist dazu eingerichtet, die mehreren nicht dargestellten Einstellaktoren derart einzustellen, dass die seitlichen Vorsatzgeräteteile 5, 6 in der Arbeitsstellung seitlich des mittleren Vorsatzgeräteteils 4 und in der Transportstellung oberhalb des mittleren Vorsatzgeräteteils 4 angeordnet sind. Die Einstellvorrichtung 19 kann eine Recheneinheit 20 und einen Datenspeicher 21 aufweisen.

Die in der Fig. 3 dargestellte berührungslose Sensorvorrichtung 17 ist als Radarsensor ausgebildet und am mittleren Vorsatzgeräteteil 4 des einstellbaren Vorsatzgerätes 2 angeordnet. Dies hat den Vorteil, dass der sensorisch erfasste Bodenabstand 18 des mittleren Vorsatzgeräteteils 4 bezüglich des Bodens 16 sowohl während der Transportstellung als auch während der Arbeitsstellung erfasst werden kann.

Die berührungslose Sensorvorrichtung 17 kann derart ausgebildet und am mittleren Vorsatzgeräteteil 4 des einstellbaren Vorsatzgerätes 2 angeordnet sein, dass zusätzlich zum aktuellen Bodenabstand 18 ein zukünftiger Bodenabstand zeitlich vorausschauend erfasst wird. Die Einstellvorrichtung 19 kann dazu eingerichtet sein, während der Transportstellung die nicht dargestellten Aktoren in Abhängigkeit des sensorisch vorausschauend erfassten

Bodenabstandes derart einzustellen, dass das Vorsatzgerät 2 den vorgegebenen Bodenabstand zeitoptimiert einnimmt.

Die Einstellvorrichtung 19 kann dazu vorgesehen und eingerichtet sein, während der Transportstellung die nicht dargestellten Aktoren in Abhängigkeit des sensorisch erfassten Bodenabstandes 18 derart einzustellen, dass der erfasste Bodenabstand 18 reduziert wird, falls dieser erfasste Bodenabstand 18 größer ist als der vorgegebene Bodenabstand. Zusätzlich oder alternativ kann die Einstellvorrichtung 19 dazu vorgesehen und eingerichtet sein, während der Transportstellung die nicht dargestellten Aktoren in Abhängigkeit des sensorisch erfassten Bodenabstandes 18 derart einzustellen, dass der erfasste Bodenabstand 18 vergrößert wird, falls dieser erfasste Bodenabstand 18 kleiner ist als der vorgegebene Bodenabstand. Hierbei kann die Einstellvorrichtung dazu vorgesehen sein, in Abhängigkeit des sensorisch erfassten Bodenabstandes 18 eine Schwingungstilgung des Vorsatzgerätes 2 zu regeln.

Bei einer vorteilhaften Weiterbildung der erfindungsgemäßen Lösung ist vorgesehen, dass die Einstellvorrichtung 19 dazu vorgesehen und eingerichtet ist, den vorgegebenen Bodenabstand in Abhängigkeit von Maschinenparametern des selbstfahrenden Feldhäckslers 1 zu ermitteln. Diese Maschinenparameter des selbstfahrenden Feldhäckslers 1 können im Datenspeicher 20 der Einstellvorrichtung 19 hinterlegt sein. Ferner kann die Einstellvorrichtung 19 dazu eingerichtet sein, den vorgegebenen Bodenabstand 18 in Abhängigkeit von Maschinenparametern des einstellbaren Vorsatzgerätes 2 zu ermitteln. Diese Maschinenparameter des einstellbaren Vorsatzgerätes 2 können im Datenspeicher 20 der Einstellvorrichtung 19 hinterlegt sein. Insbesondere kann der vorgegebene Bodenabstand in Abhängigkeit von Maschinenparametern des selbstfahrenden Feldhäckslers 1 und Maschinenparametern des einstellbaren Vorsatzgerätes 2 mittels der Einstellvorrichtung 19 ermittelt und geregelt werden. Hierdurch wird eine optimale Höheneinstellung des Vorsatzgerätes 2 während Transportfahrten sichergestellt.

### Bezugszeichenliste

- 1: Selbstfahrender Feldhäcksler
- 2: Vorsatzgerät
- 3: stängelartiges Erntegut, insbesondere Mais
- 4: mittleres Vorsatzgeräteteil
- 5: seitliches Vorsatzgeräteteil
- 6: seitliches Vorsatzgeräteteil
- 7: Einzugskanal
- 8: Häckselvorrichtung
- 9: Häckseltrommel
- 10: Trommelblech
- 11: Konditioniervorrichtung
- 12: Nachbeschleuniger
- 13: Auswurfkrümmer
- 14: Antriebsmotor
- 15: Fahrerkabine
- 16: Boden
- 17: berührungslose Sensorvorrichtung
- 18: Bodenabstand
- 19: Einstellvorrichtung
- 20: Recheneinheit
- 21: Datenspeicher
- FR: Fahrtrichtung

## Patentansprüche

1. Selbstfahrender Feldhäcksler (1)
- mit einem einstellbaren Vorsatzgerät (2), welches eine Arbeitsstellung zum Mähen, Aufnehmen und Weiterfördern von stängelartigem Erntegut (3) und eine Transportstellung für Straßenfahrten aufweist, wobei das Vorsatzgerät (2) in der Transportstellung eine kleinere Vorsatzgerätebreite als in der Arbeitsstellung aufweist, wobei das Vorsatzgerät (2) während der Transportstellung einen mittels Aktoren einstellbaren Bodenabstand (18) bezüglich des Bodens (16) aufweist, und
- mit einer Einstellvorrichtung (19) zur Einstellung des Feldhäckslers (1),
**dadurch gekennzeichnet,**
- **dass** das Vorsatzgerät (2) eine berührungslose Sensorvorrichtung (17) zur Erfassung des Bodenabstandes (18) bezüglich des Bodens (16) aufweist, und
- **dass** die Einstellvorrichtung (19) dazu vorgesehen und eingerichtet ist, während der Transportstellung die Aktoren in Abhängigkeit des sensorisch erfassten Bodenabstandes (18) derart einzustellen, dass das Vorsatzgerät (2) einen vorgegebenen Bodenabstand aufweist.

2. Selbstfahrender Feldhäcksler (1) nach Anspruch 1,
**dadurch gekennzeichnet,**
**dass** die berührungslose Sensorvorrichtung (17) als Radarsensor ausgebildet ist.

3. Selbstfahrender Feldhäcksler (1) nach einem der vorhergehenden Ansprüche,
**dadurch gekennzeichnet,**
**dass** das einstellbare Vorsatzgerät (2) ein mittleres Vorsatzgeräteteil (4) und wenigstens zwei seitliche Vorsatzgeräteteile (5, 6) aufweist.

4. Selbstfahrender Feldhäcksler (1) nach Anspruch 3,
**dadurch gekennzeichnet,**
**dass** die seitlichen Vorsatzgeräteteile (5, 6) derart mit dem mittleren Vorsatzgeräteteil (4) einstellbar verbunden sind, dass die seitlichen Vorsatzgeräteteile (5, 6) in der Arbeitsstellung seitlich des mittleren Vorsatzgeräteteils (4) und in der Transportstellung oberhalb des mittleren Vorsatzgeräteteils (4) angeordnet sind, sodass das Vorsatzgerät (2) in der Transportstellung eine kleinere Vorsatzgerätebreite als in der Arbeitsstellung aufweist.

5. Selbstfahrender Feldhäcksler (1) nach Anspruch 3 oder 4,
**dadurch gekennzeichnet,**
**dass** die berührungslose Sensorvorrichtung (17) am mittleren Vorsatzgeräteteil (4) des einstellbaren Vorsatzgerätes (2) angeordnet ist.

6. Selbstfahrender Feldhäcksler (1) nach einem der Ansprüche 3 bis 5,
**dadurch gekennzeichnet,**
**dass** die berührungslose Sensorvorrichtung (17) derart ausgebildet und am mittleren Vorsatzgeräteteil (4) des einstellbaren Vorsatzgerätes (2) angeordnet ist, dass zusätzlich zum aktuellen Bodenabstand (18) ein zukünftiger Bodenabstand (18) zeitlich vorausschauend erfassbar ist.

7. Selbstfahrender Feldhäcksler (1) nach Anspruch 6,
**dadurch gekennzeichnet,**
**dass** die Einstellvorrichtung (19) dazu vorgesehen und eingerichtet ist, während der Transportstellung die Aktoren in Abhängigkeit des sensorisch vorausschauend erfassten Bodenabstandes (18) derart einzustellen, dass das Vorsatzgerät (2) den vorgegebenen Bodenabstand zeitoptimiert einnimmt.

8. Selbstfahrender Feldhäcksler (1) nach einem der Ansprüche 3 bis 7,
**dadurch gekennzeichnet,**
**dass** das einstellbare Vorsatzgerät (2) mehrere Einstellaktoren zur Einstellung der seitlichen Vorsatzgeräteteile (5, 6) bezüglich des mittleren Vorsatzgeräteteils (4) aufweist.

9. Selbstfahrender Feldhäcksler (1) nach Anspruch 8,
**dadurch gekennzeichnet,**
**dass** die Einstellvorrichtung (19) dazu vorgesehen und eingerichtet ist, die mehrere Einstellaktoren derart einzustellen, dass die seitlichen Vorsatzgeräteteile (5, 6) in der Arbeitsstellung seitlich des mittleren Vorsatzgeräteteils (4) und in der Transportstellung oberhalb des mittleren Vorsatzgeräteteils (4) angeordnet sind.

10. Selbstfahrender Feldhäcksler (1) nach einem der vorhergehenden Ansprüche,
**dadurch gekennzeichnet,**
**dass** die Einstellvorrichtung (19) dazu vorgesehen und eingerichtet ist, während der Transportstellung die Aktoren in Abhängigkeit des sensorisch erfassten Bodenabstandes (18) derart einzustellen, dass der erfasste Bodenabstand (18) reduziert wird, falls dieser erfasste Bodenabstand (18) größer ist als der vorgegebene Bodenabstand.

11. Selbstfahrender Feldhäcksler (1) nach einem der vorhergehenden Ansprüche,
**dadurch gekennzeichnet,**
**dass** die Einstellvorrichtung (19) dazu vorgesehen und eingerichtet ist, während der Transportstellung die Aktoren in Abhängigkeit des sensorisch erfassten Bodenabstandes (18) derart einzustellen, dass der erfasste Bodenabstand (18) vergrößert wird, falls dieser erfasste Bodenabstand (18) kleiner ist als der vorgegebene Bodenabstand.

12. Selbstfahrender Feldhäcksler (1) nach einem der vorhergehenden Ansprüche,
**dadurch gekennzeichnet,**
**dass** die Einstellvorrichtung (19) dazu vorgesehen und eingerichtet ist, den vorgegebenen Bodenabstand in Abhängigkeit von Maschinenparametern des selbstfahrenden Feldhäckslers (1) zu ermitteln.

13. Selbstfahrender Feldhäcksler (1) nach einem der vorhergehenden Ansprüche,
**dadurch gekennzeichnet,**
**dass** die Einstellvorrichtung (19) dazu vorgesehen und eingerichtet ist, den vorgegebenen Bodenabstand in Abhängigkeit von Maschinenparametern des einstellbaren Vorsatzgerätes (2) zu ermitteln.

14. Selbstfahrender Feldhäcksler (1) nach einem der vorhergehenden Ansprüche,
**dadurch gekennzeichnet,**
**dass** die Einstellvorrichtung (19) dazu vorgesehen und eingerichtet ist, den vorgegebenen Bodenabstand fahrgeschwindigkeitsabhängig einzustellen.

15. Selbstfahrender Feldhäcksler (1) nach einem der vorhergehenden Ansprüche,
**dadurch gekennzeichnet,**
**dass** die Einstellvorrichtung (19) dazu vorgesehen und eingerichtet ist, in Abhängigkeit des sensorisch erfassten Bodenabstandes (18) eine Schwingungstilgung des Vorsatzgerätes (2) einzustellen.

## Claims

1. Self-propelled forage harvester (1)
- having an adjustable attachment (2) which has a working position for mowing, picking up and conveying stalk-like crop (3) and a transport position for road travel, wherein the attachment (2) has a smaller attachment width in the transport position than in the working position, wherein the attachment (2) has a ground clearance (18) with respect to the ground (16) that is adjustable by means of actuators during the transport position, and
- having an adjustment device (19) for adjusting the forage harvester (1),
**characterized**
- **in that** the attachment (2) has a contactless sensor device (17) for detecting the ground clearance (18) with respect to the ground (16), and
- **in that** the adjustment device (19) is provided and configured to adjust the actuators during the transport position on the basis of the sensorially detected ground clearance (18) in such a way that the attachment (2) has a predefined ground clearance.

2. Self-propelled forage harvester (1) according to Claim 1,
**characterized**
**in that** the contactless sensor device (17) is designed as a radar sensor.

3. Self-propelled forage harvester (1) according to one of the preceding claims,
**characterized**
**in that** the adjustable attachment (2) has a central attachment part (4) and at least two side attachment parts (5, 6).

4. Self-propelled forage harvester (1) according to Claim 3,
**characterized**
**in that** the side attachment parts (5, 6) are connected in an adjustable manner to the central attachment part (4) in such a manner that the side attachment parts (5, 6) are arranged on the side of the central attachment part (4) in the working position and above the central attachment part (4) in the transport position, with the result that the attachment (2) has a smaller attachment width in the transport position than in the working position.

5. Self-propelled forage harvester (1) according to Claim 3 or 4,
**characterized**
**in that** the contactless sensor device (17) is arranged on the central attachment part (4) of the adjustable attachment (2).

6. Self-propelled forage harvester (1) according to one of Claims 3 to 5,
**characterized**
**in that** the contactless sensor device (17) is formed and arranged on the central attachment part (4) of the adjustable attachment (2) in such a way that, in addition to the current ground clearance (18), a future ground clearance (18) can be detected predictively in terms of time.

7. Self-propelled forage harvester (1) according to Claim 6,
**characterized**
**in that** the adjustment device (19) is provided and configured to adjust the actuators, during the transport position, on the basis of the sensorially predictively detected ground clearance (18) such that the attachment (2) occupies the predefined ground clearance in a time-optimized manner.

8. Self-propelled forage harvester (1) according to one of Claims 3 to 7,
**characterized**
**in that** the adjustable attachment (2) has a plurality of adjustment actuators for adjusting the side attachment parts (5, 6) with respect to the central attachment part (4).

9. Self-propelled forage harvester (1) according to Claim 8,
**characterized**
**in that** the adjustment device (19) is provided and configured to adjust the plurality of adjustment actuators such that the side attachment parts (5, 6) are arranged on the side of the central attachment part (4) in the working position and above the central attachment part (4) in the transport position.

10. Self-propelled forage harvester (1) according to one of the preceding claims,
**characterized**
**in that** the adjustment device (19) is provided and configured to adjust the actuators during the transport position on the basis of the sensorially detected ground clearance (18) in such a way that the detected ground clearance (18) is reduced if this detected ground clearance (18) is greater than the predefined ground clearance.

11. Self-propelled forage harvester (1) according to one of the preceding claims,
**characterized**
**in that** the adjustment device (19) is provided and configured to adjust the actuators during the transport position on the basis of the sensorially detected ground clearance (18) in such a way that the detected ground clearance (18) is increased if this detected ground clearance (18) is less than the predefined ground clearance.

12. Self-propelled forage harvester (1) according to one of the preceding claims,
**characterized**
**in that** the adjustment device (19) is provided and configured to determine the predefined ground clearance on the basis of machine parameters of the self-propelled forage harvester (1).

13. Self-propelled forage harvester (1) according to one of the preceding claims,
**characterized**
**in that** the adjustment device (19) is provided and configured to determine the predefined ground clearance on the basis of machine parameters of the adjustable attachment (2).

14. Self-propelled forage harvester (1) according to one of the preceding claims,
**characterized**
**in that** the adjustment device (19) is provided and configured to adjust the predefined ground clearance depending on the speed of travel.

15. Self-propelled forage harvester (1) according to one of the preceding claims,
**characterized**
**in that** the adjustment device (19) is provided and configured to adjust a vibration damping of the attachment (2) on the basis of the sensorially detected ground clearance (18).

## Revendications

1. Ramasseuse-hacheuse automotrice (1)
- comprenant un accessoire (2) réglable, lequel présente une position de travail pour faucher, ramasser et transporter une récolte de type à tige (3) et une position de transport pour la circulation sur route, l'accessoire (2) présentant, dans la position de transport, une largeur d'accessoire plus petite que dans la position de travail, l'accessoire (2) présentant, dans la position de transport, une garde au sol (18) par rapport au sol (16) qui peut être réglée au moyen d'actionneurs, et
- comprenant un dispositif de réglage (19) destiné au réglage de la ramasseuse-chargeuse (1),
**caractérisée en ce**
- **que** l'accessoire (2) possède un dispositif capteur sans contact (17) destiné à détecter la garde au sol (18) par rapport au sol (16), et
- **que** le dispositif de réglage (19) est prévu et conçu pour, pendant la position de transport, régler les actionneurs en fonction de la garde au sol (18) détectée par capteur de telle sorte que l'accessoire (2) présente une garde au sol prédéfinie.

2. Ramasseuse-hacheuse automotrice (1) selon la revendication 1,
**caractérisée en ce**
**que** le dispositif de détection sans contact (17) est réalisé sous la forme d'un capteur radar.

3. Ramasseuse-hacheuse automotrice (1) selon l'une des revendications précédentes,
**caractérisée en ce**
**que** l'accessoire (2) réglable possède une partie d'accessoire centrale (4) et au moins deux parties d'accessoire latérales (5, 6).

4. Ramasseuse-hacheuse automotrice (1) selon la revendication 3,
**caractérisée en ce**
**que** les parties d'accessoire latérales (5, 6) sont reliées de manière réglable à la partie d'accessoire centrale (4) de telle sorte que les parties d'accessoire latérales (5, 6), dans la position de travail, sont disposées latéralement par rapport à la partie d'accessoire centrale (4) et, dans la position de transport, au-dessus de la partie d'accessoire centrale (4), de sorte que l'accessoire (2) présente, dans la position de transport, une largeur d'accessoire plus petite que dans la position de travail.

5. Ramasseuse-hacheuse automotrice (1) selon la revendication 3 ou 4,
**caractérisée en ce**
**que** le dispositif de détection sans contact (17) est disposé sur la partie d'accessoire centrale (4) de l'accessoire (2) réglable.

6. Ramasseuse-hacheuse automotrice (1) selon l'une des revendications 3 à 5,
**caractérisée en ce**
**que** le dispositif de détection sans contact (17) est configuré et disposé sur la partie d'accessoire centrale (4) de l'accessoire (2) réglable de telle sorte qu'en plus de la garde au sol (18) actuelle, une future garde au sol (18) peut être détectée de manière anticipée dans le temps.

7. Ramasseuse-hacheuse automotrice (1) selon la revendication 6,
**caractérisée en ce**
**que** le dispositif de réglage (19) est prévu et conçu pour, pendant la position de transport, régler les actionneurs en fonction de la garde au sol (18) détectée par capteur de manière anticipée dans le temps de telle sorte que l'accessoire (2) adopte la garde au sol prédéfinie de manière optimisée dans le temps.

8. Ramasseuse-hacheuse automotrice (1) selon l'une des revendications 3 à 7,
**caractérisée en ce**
**que** l'accessoire (2) réglable possède de multiples actionneurs de réglage destinés au réglage des parties d'accessoire latérales (5, 6) par rapport à la partie d'accessoire centrale (4).

9. Ramasseuse-hacheuse automotrice (1) selon la revendication 8,
**caractérisée en ce**
**que** le dispositif de réglage (19) est prévu et conçu pour régler les multiples actionneurs de réglage de telle sorte que les parties d'accessoire latérales (5, 6), dans la position de travail, sont disposées latéralement par rapport à la partie d'accessoire centrale (4) et, dans la position de transport, au-dessus de la partie d'accessoire centrale (4).

10. Ramasseuse-hacheuse automotrice (1) selon l'une des revendications précédentes,
**caractérisée en ce**
**que** le dispositif de réglage (19) est prévu et conçu pour, pendant la position de transport, régler les actionneurs en fonction de la garde au sol (18) détectée par capteur de telle sorte que la garde au sol (18) détectée est réduite dans le cas où cette garde au sol (18) détectée est supérieure à la garde au sol prédéfinie.

11. Ramasseuse-hacheuse automotrice (1) selon l'une des revendications précédentes,
**caractérisée en ce**
**que** le dispositif de réglage (19) est prévu et conçu pour, pendant la position de transport, régler les actionneurs en fonction de la garde au sol (18) détectée par capteur de telle sorte que la garde au sol (18) détectée est augmentée dans le cas où cette garde au sol (18) détectée est inférieure à la garde au sol prédéfinie.

12. Ramasseuse-hacheuse automotrice (1) selon l'une des revendications précédentes,
**caractérisée en ce**
**que** le dispositif de réglage (19) est prévu et conçu pour déterminer la garde au sol prédéfinie en fonction de paramètres de machine de la ramasseuse-hacheuse automotrice (1).

13. Ramasseuse-hacheuse automotrice (1) selon l'une des revendications précédentes,
**caractérisée en ce**
**que** le dispositif de réglage (19) est prévu et conçu pour déterminer la garde au sol prédéfinie en fonction de paramètres de machine de l'accessoire(2) réglable.

14. Ramasseuse-hacheuse automotrice (1) selon l'une des revendications précédentes,
**caractérisée en ce**
**que** le dispositif de réglage (19) est prévu et conçu pour régler la garde au sol prédéfinie en fonction de la vitesse de déplacement.

15. Ramasseuse-hacheuse automotrice (1) selon l'une des revendications précédentes,
**caractérisée en ce**
**que** le dispositif de réglage (19) est prévu et conçu pour régler un amortissement des oscillations de l'accessoire (2) en fonction de la garde au sol (18) détectée par capteur.
